# EUROPÄISCHE PATENTSCHRIFT

(11) **EP 1 464 440 B1**
(45) Veröffentlichungstag und Bekanntmachung des Hinweises auf die Patenterteilung: **31.05.2006**
(21) Anmeldenummer: 04003333.4
(22) Anmeldetag: 01.03.2004
(51) Int. Cl.: B23Q 1/76

(54) **Abstützvorrichtung**
Steady rest
Lunette

(30) Priorität: 02.04.2003 DE 10315006
(43) Veröffentlichungstag der Anmeldung: 06.10.2004
(73) Patentinhaber: WFL Millturn Technologies GmbH & Co. KG, A-4030 Linz (AT)
(72) Erfinder: Siegwart, Rudolf, 4100 Ottensheim (AT)
(74) Vertreter: Engelhardt, Guido

(56) Entgegenhaltungen:
- EP-A- 0 988 923
- US-A- 1 370 705
- US-A- 1 881 147

## Beschreibung

Die Erfindung bezieht sich auf eine Vorrichtung zur Abstützung eines Werkstückes in einer Werkzeugmaschine, insbesondere einer Kurbel-Welle in einer Schrägbett-Dreh-Fräsmaschine, mittels zweier mit seitlichem Abstand zueinander angeordneter und radial zu dem Werkstück verstellbarer Stützglieder, die in einem Gehäuse gehalten sind und auf denen das Werkstück aufliegt, wobei die Stützglieder als an dem dem Werkstück abgewandten Ende verschwenkbar in dem Gehäuse gelagerte Hebel ausgebildet sind, die über eine Gewindespindel trieblich miteinander verbunden sind, die Gewindespindel in den den beiden Stützgliedern zugeordneten Bereichen gegenläufige Gewindeabschnitte aufweist und mit den beiden Gewindeabschnitten jeweils in einen Kulissenstein eingreift, die in in die Stützglieder eingearbeitete achssenkrecht zu der Gewindespindel ausgerichtete zylindrische Bohrungen drehbar gelagert sind.

Eine Abstützvorrichtung dieser Art, die auch als Lünette bezeichnet wird, ist durch die EP 0 988 923 A1 bekannt. Obwohl eine gemeinsame Verstellung der Stützglieder mittels der Gewindespindel erfolgt, ist eine zufriedenstellende Abstützung eines Werkstückes bei dessen Bearbeitung dennoch nicht gewährleistet. Durch die hohen insbesondere bei Schrubbarbeiten auftretenden Kräfte werden nämlich die Stützglieder, die lediglich über die Gewindespindel gegenseitig abgestützt sind, ausgelenkt, so dass oftmals Fertigungstoleranzen, zumal auch die ineinandergreifenden Gewindeabschnitte Spiel aufweisen müssen, in Kauf zu nehmen sind. Der Einsatzbereich dieser bekannten Abstützvorrichtung ist demnach begrenzt.

Aufgabe der Erfindung ist es daher, eine Abstützvorrichtung der vorgenannten Gattung in der Weise auszubilden, dass auch durch hohe Belastungen der Stützglieder keine Auslenkungen und dadurch bedingte Fertigungsungenauigkeiten auftreten. Die verstellbaren Bauteile der Abstützvorrichtung sollen vielmehr auf einfache Weise blockiert werden können, so dass unerwünschte Verstellbewegungen verhindert sind. Des weiteren soll erreicht werden, dass die Abstützvorrichtung klein baut, einen großen Verstellbereich aufweist und außerhalb der Werkzeugmaschine betätigt werden kann, so dass Verstellungen ohne Schwierigkeiten und in kurzer Zeit vorzunehmen sind. Der Bauaufwand, mittels dem dies zu bewerkstelligen ist, soll gering gehalten werden, dennoch sollen Werkstücke stets betriebssicher abzustützen sein. Bei einfacher Handhabung soll demnach eine vielseitige Verwendbarkeit gegeben sein.

Gemäß der Erfindung wird dies bei einer Abstützvorrichtung der vorgenannten Art dadurch erreicht, dass die Gewindespindel mit einer Einrichtung zur Arretierung in einer eingenommenen Betriebsstellung versehen ist.

Die Arretiereinrichtung der Gewindespindel kann in einfacher Ausgestaltung aus einem mit dem Gehäuse der Vorrichtung verbundenen Stellglied, durch das die Gewindespindel hindurchgeführt ist, und einem oder zwei Spannkeilen gebildet sein, die mit der Gewindespindel und dem Stellglied zusammenwirken, wobei die Gewindespindel mit einem innerhalb des Stellgliedes auf dieser angeordneten Widerlager, zum Beispiel in Form eines aufgeschraubten Ringes, versehen sein sollte, zwischen dem und dem Stellglied die Spannkeile, vorzugsweise mit Hilfe von Servoeinrichtungen, verspannbar sind.

Zum selbsttätigen Ausgleich eines Versatzes der Stützglieder sollte das Stellglied gegenüber der Gewindespindel verschwenkbar und höhenverstellbar zu dieser und somit kardanisch beweglich in dem Gehäuse der Vorrichtung angeordnet sein. Dies kann in der Weise bewerkstelligt werden, in dem unmittelbar an dem Gehäuse oder an in dieses eingesetzter Kulissensteine jeweils ein Zapfen angeformt ist, die in in das Stellglied eingearbeitete Bohrungen eingreifen bzw. zur Höhenverstellung des Stellgliedes sollte in in das Gehäuse eingearbeitete Nuten jeweils ein Kulissenstein eingesetzt sein, die mit dem Stellglied verbunden sind.

Nach einer sehr vorteilhaften Weiterbildung ist zur Justierung der Zentriermitte des Werkstückes bei blockierter Arretiervorrichtung vorgesehen, diese in Achsrichtung der Gewindespindel verstellbar anzuordnen.

Dies kann in einfacher Weise dadurch bewerkstelligt werden, dass die Arretiervorrichtung mittels der Kulissensteine in einem Schieber kardanisch aufgehängt wird, der in in die Platten des Gehäuses der Vorrichtung eingearbeiteten Nuten über ein vorzugsweise als Drehspindel ausgebildetes Zugglied verstellbar geführt ist.

Zweckmäßig ist es ferner, die Gewindespindel etwa in der Mitte zwischen Anlenkungen bildende Lagerbolzen der Stützglieder und an diesen vorgesehene Auflagerollen für das Werkstück anzuordnen und das Gehäuse aus zwei mit Abstand zueinander gehaltene Platten herzustellen, zwischen denen die Stützglieder und deren Lagerbolzen eingesetzt sind. Außerdem sollte in den Stützgliedern beidseits der Kulissensteine jeweils ein Freiraum zur Aufnahme der Gewindespindel bei eventuellen Schrägstellungen vorgesehen sein.

Angebracht ist es des weiteren, die Vorrichtung mit einem verschwenkbar in dem Gehäuse gelagerten vorzugsweise mittels einer Servoeinrichtung betätigbaren Stützhebel zu versehen, der auf der den Stützgliedern gegenüberliegenden Seite auf das Werkstück einwirkt, und die Stützglieder mit auswechselbar an diesen angebrachten Adaptern auszustatten.

Wird eine Abstützvorrichtung gemäß der Erfindung ausgebildet, so ist es ohne Schwierigkeiten möglich, die beiden Stützglieder mittels der mit diesen über gegenläufige Gewindeabschnitte verbundenen Gewindespindel, die seitlich neben dem Werkstück von Hand oder maschinell betätigt werden kann, zu verstellen und in der eingenommenen Betriebsposition zu blockieren, so dass die Stützglieder unverrückbar fixiert sind. Die Stützglieder werden dabei je nach Drehrichtung der Gewindespindel gemeinsam auf den Mittelpunkt des abzustützenden Werkstückes zu- oder von diesem wegbewegt, so dass eine Verstellung bzw. ein Nachjustieren nach dem Einlegen eines Werkstückes in kurzer Zeit und auf einfache Weise vorzunehmen sind. Und liegt das zu bearbeitende Werkstück auf den Stützgliedern auf, werden die Gewindespindel und die mit diesen verbundenen Stützglieder in dieser Betriebsstellung mit Hilfe der Arretiervorrichtung mit dem Gehäuse verspannt, eine Lageänderung des Werkstückes und dadurch bedingte Fertigungsungenauigkeiten sind bei dessen Bearbeitung dadurch nahezu ausgeschlossen.

Der Bauaufwand, der zur Herstellung der Abstützvorrichtung erforderlich ist, ist gering, eine kostengünstige Fertigung ist demnach zu erzielen. Und da der Verstellbereich der verschwenkbar gelagerten Stützglieder groß gewählt werden kann bzw. indem diese mit Adapter ausgestattet werden und die vorschlagsgemäß ausgebildete Abstützvorrichtung klein baut, ist eine vielseitige Verwendbarkeit, insbesondere auch auf Schrägbettwerkzeugmaschinen bei einfacher Bedienbarkeit gegeben.

In der Zeichnung ist ein Ausführungsbeispiel der gemäß der Erfindung gestalteten Abstützvorrichtung dargestellt, das nachfolgend im einzelnen erläutert ist. Hierbei zeigt:
- Figur 1: die in einer Werkzeugmaschine eingebaute Abstützvorrichtung, in Vorderansicht und teilweise im Schnitt, sowie in vergrößerten Darstellungen,
- Figur 2: die Abstützvorrichtung nach Figur 1 in Seitenansicht, ebenfalls teilweise im Schnitt,
- Figur 3: einen Schnitt nach der Linie III - III der Figur 1,
- Figur 4: die bei der Abstützvorrichtung nach Figur 1 vorgesehene Arretiervorrichtung in einer vergrößerten Darstellung und in einem Axialschnitt, und
- Figur 5: die Anordnung der Arretiervorrichtung in einem verstellbaren Schieber.

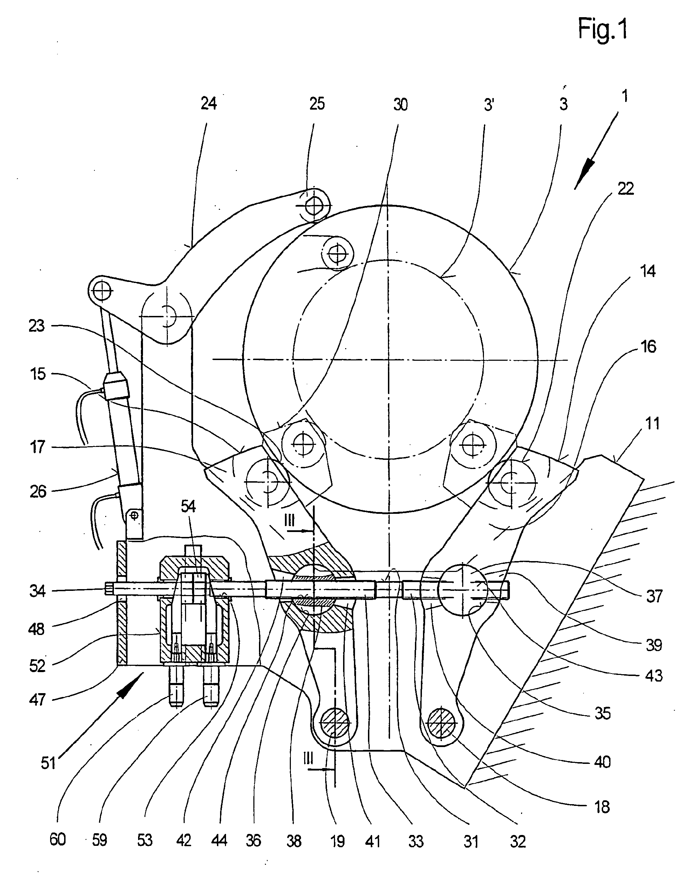

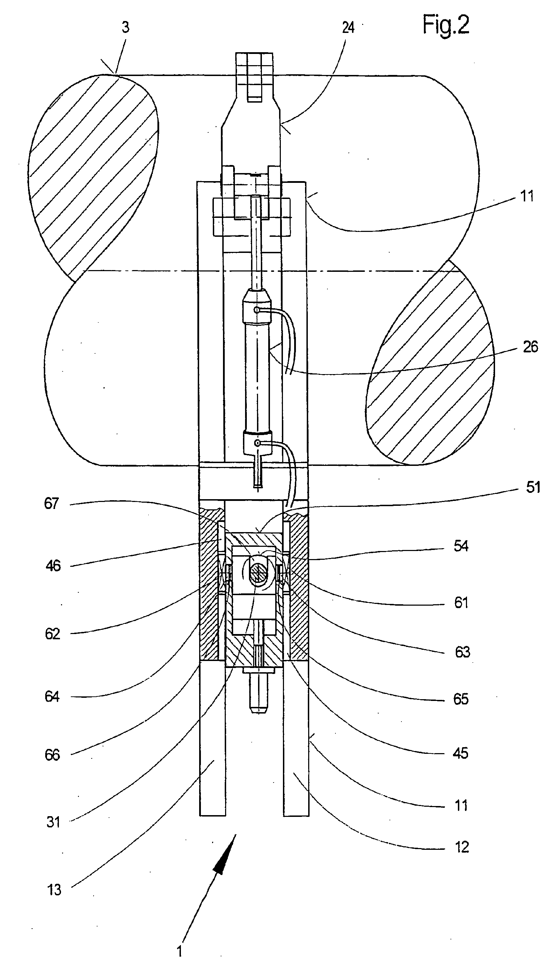

Die in den Figuren 1 und 2 dargestellte und mit 1 bezeichnete Vorrichtung dient zur Abstützung insbesondere großer und schwerer Werkstücke 3 in einer Werkzeugmaschine 2, z.B. in einer Schrägbett-Dreh-Fräsmaschine, und besteht im wesentlichen aus zwei ein einem Gehäuse 11 verschwenkbar gelagerter Stützglieder 14 und 15, die zur gemeinsamen Verstellung über eine Gewindespindel 31 trieblich miteinander verbunden sind. Die Gewindespindel 31 ist dazu mit zwei gegenläufigen Gewindeabschnitten 32 und 33 versehen, die mit entsprechenden Gewindebohrungen 43 bzw. 44 ausgestattete, in den Stützgliedern 14 und 15 gehaltene Kulissensteine 37 und 38 eingreift.

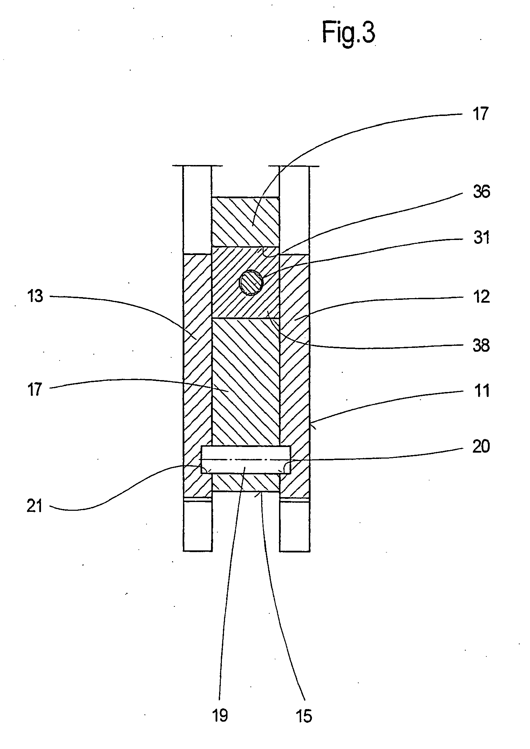

Das Gehäuse 11 besteht bei dem gezeigten Ausführungsbeispiel aus zwei mit Abstand zueinander angeordneten Platten 12 und 13, in denen, wie dies insbesondere der Figur 3 zu entnehmen ist, die als Hebel 16 bzw. 17 ausgebildeten Stützglieder 14 und 15 mit ihrem dem Werkstück 3 abgewandten Enden mittels Bolzen 18 und 19, die in in die Platten 12 und 13 eingearbeiteten Bohrungen 20 und 21 gehalten sind, verschwenkbar gelagert sind. An den den Bolzen 18 und 19 gegenüberliegenden Enden der Stützglieder 14 und 15 sind jeweils Rollen 22 und 23 angebracht, auf denen das Werkstück 3 aufliegt.

Die auf die Gewindespindel 31 aufgeschraubten Kulissensteine 37 und 38 sind als zylindrische Rollen gestaltet und in Bohrungen 35 bzw. 36 eingesetzt, die achssenkrecht zu der Gewindespindel 31 in die Hebel 16 und 17 der Stützglieder 14 und 15 eingearbeitet sind. Außerdem sind in die Hebel 16 und 17 beidseits der Kulissensteine 37 und 38 Freisparungen 39 und 40 bzw. 41 und 42 eingearbeitet, in die die Gewindespindel 31 bei Schwenkbewegungen der Hebel 16 und 17 eingreifen kann.

Wird die Gewindespindel 31 mit Hilfe eines auf deren aus dem Gehäuse 11 ragenden Endstückes 34 aufsetzbaren Werkzeuges verdreht, das Endstück 34 durchgreift dazu eine mit einer Bohrung 48 versehene auf die Platten 12 und 13 des Gehäuses 11 aufgeschraubte Stützplatte 47, so werden je nach Drehrichtung die beiden Stützglieder 14 und 15 um die Bolzen 18 und 19 aufeinander zu- oder voneinander wegverschwenkt. Die Kulissensteine 37 und 38 verdrehen sich dabei, um die Schwenkbewegungen der Stützglieder 14 und 15 auszugleichen, in den Bohrungen 35 und 36, so dass die Gewindespindel 31 parallel nach oben oder unten verstellt wird. Die Rollen 22 und 23 der Stützglieder 14 und 15 werden somit gemeinsam und gleichmäßig auf das Werkstück 3 zu- oder von diesem wegbewegt.

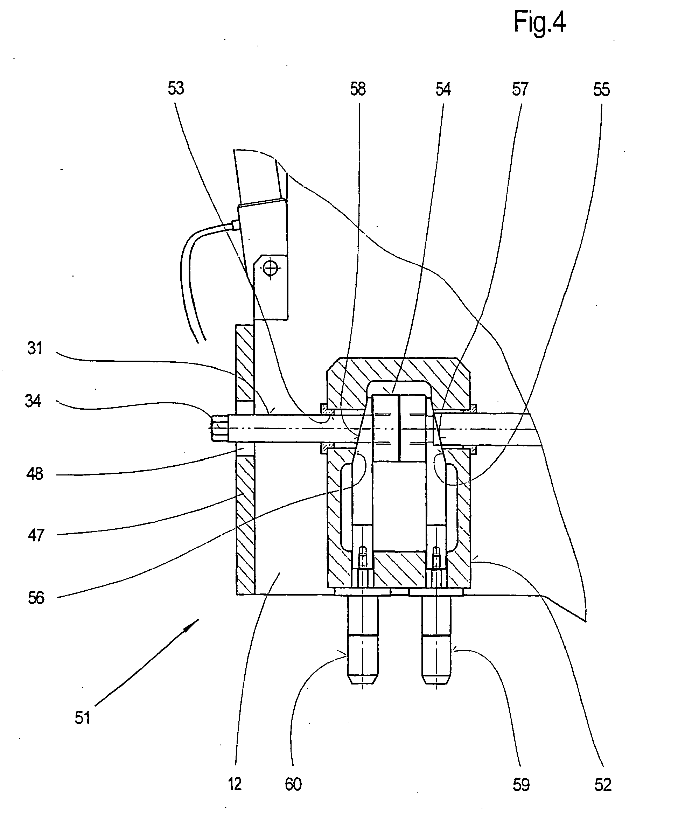

Ist ein Werkstück 3 in der Vorrichtung 1 abgestützt, wie dies in Figur 1 dargestellt ist, und soll dieses bearbeitet werden, werden die Stützhebel 14 und 15 in dieser Betriebsstellung arretiert. Dazu ist eine Arretiervorrichtung 51 vorgesehen, die in Figur 4 im Schnitt wiedergegeben ist.

In einem gehäuseartig ausgebildeten Stellglied 52, das die Gewindespindel 51 in Bohrungen 53 durchgreift, sind auf zwei einander gegenüberliegenden Innenseiten Keilflächen 55 und 56 angearbeitet und auf der Gewindespindel 51 ist ein als Ring 54 ausgebildetes Widerlager angebracht, zwischen denen mittels Servoeinrichtungen 59 bzw. 60 verstellbare Keilstücke 57 und 58 eingreifen. Werden die Servoeinrichtungen 59 und 60 betätigt, so werden die Keilstücke 57 und 58 in Richtung der Gewindespindel 51 verschoben, so dass das Stellglied 52 über den Ring 54 fest mit der Gewindespindel 51 verspannt ist und somit die Stützhebel 14 und 15 blockiert sind.

Um einen beim Einspannen des Werkstückes 3 und/oder dessen Bearbeitung sich ergebenden eventuellen Versatz ausgleichen zu können, ist die Arretiervorrichtung 51 höhenverstellbar und verschwenkbar in dem Gehäuse 11 abgestützt. Dazu dienen, wie dies in Figur 2 gezeigt ist, in in die Platten 12 und 13 eingearbeitete Nuten 45 und 46 eingesetzte Kulissensteine 61 und 62, die mit in Richtung des Stellgliedes 52 abstehenden Zapfen 63 bzw. 64 versehen sind. Des Weiteren ist das Stellglied 52 mit Bohrungen 65 und 66 versehen, in die die Zapfen 63 und 64 eingreifen. Das Stellglied 52 kann somit bei einer durch das Werkstück 3 ausgelösten Verstellbewegung der Stützglieder 14 und 15 um die Achse der Zapfen 63 und 64 geringfügig gedreht und außerdem durch Verschieben der Kulissensteine 61 und 62 in den Nuten 45 und 46 in der Höhe verstellt werden.

Um die Keilstücke 57 und 58 auf Höhe der Gewindespindel 31 in das Stellglied 52 einsetzen zu können, sind in diese langlochartige Ausnehmungen 67 eingearbeitet, die die Gewindespindel 31 aufnehmen. Außerdem ist die Abstützvorrichtung 1 auf der den Stützgliedern 14 und 15 gegenüberliegenden Seite mit einem verschwenkbaren Stützhebel 24 ausgestattet, der über eine Rolle 25 auf das Werkstück 3 einwirkt und mit Hilfe einer Servoeinrichtung 26 betätigbar ist. Des weiteren können, wie dies in Figur 1 strichpunktiert eingezeichnet ist, die Stützglieder 14 und 15 mit Adaptern 30 ausgestattet werden, so dass auch Werkstücke 3' kleineren Durchmessers in der Vorrichtung 1 sicher abzustützen sind.

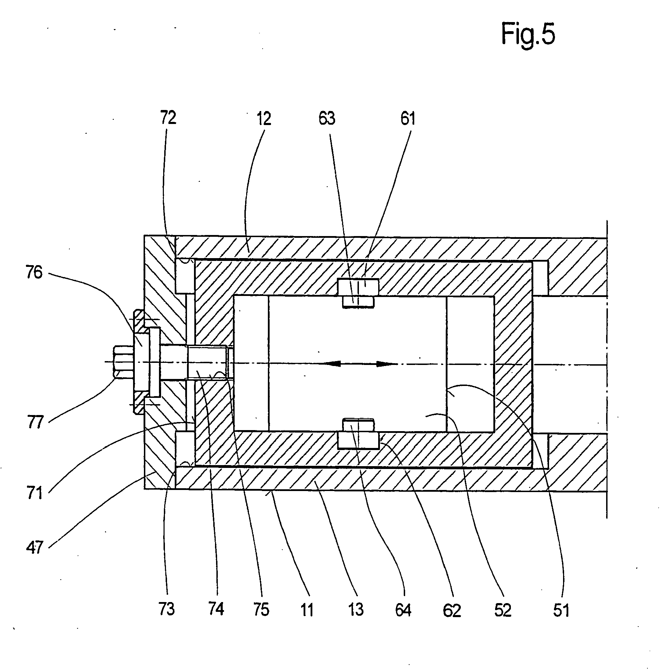

In Figur 5 ist schematisch dargestellt, in welcher Weise die blockierte Arretiervorrichtung 51 nachträglich in Richtung der Gewindespindel 31 verstellt werden kann, um gegebenenfalls eine erforderliche Justierung der Zentriermitte des angespannten Werkstückes 3 vorzunehmen.

Das Stellglied 52 der Arretiervorrichtung 51 ist dazu mittels der Kulissensteine 61 und 62 und der von diesen abstehenden in das Stellglied 52 eingreifenden Zapfen 63 und 64 kardanisch in einem Schieber 71 aufgehängt, der in in die Platten 12 und 13 des Gehäuses 11 eingearbeiteter Nuten 72 und 73 verstellbar geführt ist. Außerdem greift in eine in dem Schieber 71 vorgesehene Gewindebohrung 75 eine Drehspindel 74 ein, die in einem in der Stützplatte 47 gehaltenen Bund 76 verdrehbar gelagert ist.

Wird mit Hilfe eines an der aus dem Gehäuse 11 ragenden Ende der Drehspindel 74 angearbeiteten Schlüsselfläche 77 ein Werkzeug angesetzt und somit die Drehspindel 74 verdreht, so schraubt sich diese - je nach Drehrichtung - in die Gewindebohrung 75 hinein oder aus dieser heraus, so dass der Schlitten 71 und mit diesem die Arretiervorrichtung 51 horizontal verstellt werden. Und da die Arretiervorrichtung 51 fest mit der Gewindespindel 31 verbunden ist, wird diese mitgenommen und durch diese werden die Stützglieder 14 und 15 der Vorrichtung 1 verschwenkt. Eine nachträgliche Justierung der Zentriermitte des eingespannten Werkstückes 3 ist auf diese Weise leicht möglich. Ein dabei auftretender Höhenversatz wird durch die kardanische Aufhängung des Stellgliedes 52 der Arretiervorrichtung 51 ausgeglichen.

## Patentansprüche

1. Vorrichtung (1) zur Abstützung eines Werkstückes (3) in einer Werkzeugmaschine (2), insbesondere einer Kurbel-Welle in einer Schrägbett-Dreh-Fräsmaschine, mittels zweier mit seitlichem Abstand zueinander angeordneter und radial zu dem Werkstück (3) verstellbarer Stützglieder (14, 15), die in einem Gehäuse (11) gehalten sind und auf denen das Werkstück (3) aufliegt, wobei die Stützglieder (14, 15) als an dem dem Werkstück (3) abgewandten Ende verschwenkbar in dem Gehäuse (11) gelagerte Hebel (16, 17) ausgebildet sind, die über eine Gewindespindel (31) trieblich miteinander verbunden sind, die Gewindespindel (31) in den den beiden Stützgliedern (14, 15) zugeordneten Bereichen gegenläufige Gewindeabschnitte (32, 33) aufweist und mit den beiden Gewindeabschnitten (32, 33) jeweils in einen Kulissenstein (37 bzw. 38) eingreift, die in in die Stützglieder (14, 15) eingearbeitete achssenkrecht zu der Gewindespindel (31) ausgerichtete zylindrische Bohrungen (35, 36) drehbar gelagert sind,
**dadurch gekennzeichnet,**
**dass** die Gewindespindel (31) mit einer Einrichtung (51) zur Arretierung in einer eingenommenen Betriebsstellung versehen ist.

2. Vorrichtung nach Anspruch 1,
**dadurch gekennzeichnet ,**
**dass** die Arretiereinrichtung (51) der Gewindespindel (31) aus einem mit dem Gehäuse (11) der Vorrichtung (1) verbundenen Stellglied (52), durch das die Gewindespindel (31) hindurchgeführt ist, und einem oder zwei Spannkeilen (57, 58) gebildet ist, die mit der Gewindespindel (31) und dem Stellglied (52) zusammenwirken.

3. Vorrichtung nach Anspruch 1 oder 2,
**dadurch gekennzeichnet,**
**dass** die Gewindespindel (31) mit einem innerhalb des Stellgliedes (52) auf dieser angeordneten Widerlager (54), zum Beispiel in Form eines Ringes, versehen ist, zwischen dem und dem Stellglied (52) die Spannkeile (57, 58), vorzugsweise mit Hilfe von Servoeinrichtungen (59, 60), verspannbar sind.

4. Vorrichtung nach einem der Ansprüche 1 bis 3,
**dadurch gekennzeichnet,**
**dass** zum selbsttätigen Ausgleich eines Versatzes das Stellglied (52) der Arretiervorrichtung (51) gegenüber der Gewindespindel (51) verschwenkbar und höhenverstellbar zu dieser in dem Gehäuse (11) der Vorrichtung (1) angeordnet ist

5. Vorrichtung nach Anspruch 4,
**dadurch gekennzeichnet,**
**dass** zur verschwenkbaren Lagerung des Stellgliedes (52) unmittelbar an dem Gehäuse (11) oder an in dieses eingesetzter Kulissensteine (61, 62) jeweils ein Zapfen (63, 64) angeformt ist, die in in das Stellglied (52) eingearbeitete
Bohrungen (65, 66) eingreifen.

6. Vorrichtung nach Anspruch 4 oder 5,
**dadurch gekennzeichnet,**
**dass** zur Höhenverstellung des Stellgliedes (52) in in das Gehäuse (11) eingearbeitete Nuten (43, 44) jeweils ein Kulissenstein (61, 62) eingesetzt ist, die mit dem Stellglied (52) verbunden sind.

7. Vorrichtung nach einem oder mehreren der Ansprüche 1 bis 6,
**dadurch gekennzeichnet,**
**dass** zur Justierung der Zentriermitte des Werkstückes (3) bei blockierter Arretiervorrichtung (51) diese in Achsrichtung der Gewindespindel (31) verstellbar gehalten ist.

8. Vorrichtung nach Anspruch 7,
**dadurch gekennzeichnet,**
**dass** die Arretiervorrichtung (51) mittels der Kulissensteine (61, 62) in einem Schieber (71) kardanisch aufgehängt ist, der in in die Platten (12, 13) des Gehäuses (11) der Vorrichtung (1) eingearbeitete Nuten (72, 73) über ein vorzugsweise als Drehspindel (74) ausgebildetes Zugglied verstellbar geführt ist.

9. Vorrichtung nach einem
der Ansprüche 1 bis 8,
**dadurch gekennzeichnet,**
**dass** die Gewindespindel (31) etwa in der Mitte zwischen Anlenkungen bildende Lagerbolzen (18, 19) der Stützglieder (14, 15) und an diesen vorgesehenen Auflagerollen (22, 23) für das Werkstück (3) angeordnet ist.

10. Vorrichtung nach einem
der Ansprüche 1 bis 9,
**dadurch gekennzeichnet,**
**dass** das Gehäuse (11) aus zwei mit Abstand zueinander angeordneten Platten (12, 13) besteht, zwischen denen die Stützglieder (14, 15) und deren Lagerbolzen (18, 19) angeordnet sind.

11. Vorrichtung nach einem der Ansprüche 1 bis 10,
**dadurch gekennzeichnet,**
**dass** in den Stützgliedern (14, 15) beidseits der Kulissensteine (37, 38) jeweils ein Freiraum (39, 40 bzw. 41, 42)) zur Aufnahme der Gewindespindel (31) vorgesehen ist.

12. Vorrichtung nach einem der Ansprüche 1 bis 11,
**dadurch gekennzeichnet,**
**dass** die Vorrichtung (1) mit einem verschwenkbar in dem Gehäuse (11) gelagerten vorzugsweise mittels einer Servoeinrichtung (26) betätigbaren Stützhebel (24) versehen ist, der auf der den Stützgliedern (14, 15) gegenüberliegenden Seite auf das Werkstück (3) einwirkt.

13. Vorrichtung nach einem oder mehreren der Ansprüche 1 bis 12,
**dadurch gekennzeichnet,**
**dass** die Stützglieder (14, 15) mit auswechselbar an diesen angebrachten Adaptern (30) versehen sind.

## Claims

1. A fixture (1) for supporting a workpiece (3) in a machine tool (2), in particular a crankshaft in an inclined-bed turning and milling machine, by means of two support elements (14, 15) arranged at a lateral distance from one another and radially moveable in relation to the workpiece (3), the support elements (14, 15) being held in a housing (11), having the workpiece (3) lying on them and with their ends facing away from the workpiece (3) being formed as two levers (16, 17) in a swiveling mounting in the housing (11), in which case the levers (16, 17) are driveably connected to one another by a threaded spindle (31), with the threaded spindle (31) displaying counter-rotating thread sections (32, 33) in its areas corresponding to the two support elements (14, 15), with each of the threaded sections (32, 33) engaging in a sliding block (37 or 38) and held in a rotating mounting in the cylindrical holes (35, 36) worked into the support elements (14, 15) at an angle perpendicular to the threaded spindle (31).
**characterized in that**,
the threaded spindle (31) is provided with a device (51) for locking it in the
operating position to which it is set.

2. The fixture in accordance with Claim 1,
**characterized in that**,
the locking device (51) for the threaded spindle (31) can consist of an adjusting element (52) connected to the housing (11) of the fixture (1), through which the threaded spindle (31) is passed, and one or two expanding wedges (57, 58) which interact with the threaded spindle (31) and the adjusting element (52).

3. The fixture in accordance with Claim 1 or 2,
**characterized in that**,
the threaded spindle (31) is provided with an abutting piece (54) arranged inside the adjusting element (52) and on the threaded spindle (31), for example in the form of a ring, between which ring and the adjusting element (52) the expanding wedges (57, 58) are clamped, in a preferred embodiment with the help of servo devices (59, 60).

4. The fixture in accordance with one or more of Claims 1 to 3,
**characterized in that**,
to provide for automatic adjustment for any misalignment, the adjusting element (52) of the locking device (51) should be able to swivel and be adjustable in height in relation to the threaded spindle (51) in the housing (11) of the fixture (1).

5. The fixture in accordance with Claim 4,
**characterized in that**,
a spigot (63, 64) is mounted directly onto the housing (11) or onto each of the sliding blocks (61, 62) inserted into the housing (11), each of which engage in the holes (65, 66) worked into the adjusting element (52).

6. The fixture in accordance with Claim 4 or 5,
**characterized in that**,
in order to allow the height of the adjusting element (52) to be adjusted there is a sliding block (61, 62) inserted into each of the grooves (43, 44) worked into the housing (11) and connected to the adjusting element (52).

7. The fixture in accordance with one or more of Claims 1 to 6,
**characterized in that**,
the locking device (51) is adjustable in the axial direction of the threaded spindle (31) so that the centering point of the workpiece (3) can be adjusted in the axial direction of the threaded spindle (31).

8. The fixture in accordance with Claim 7,
**characterized in that**,
the locking device (51) is mounted in a slide (71) using a cardan-type arrangement with the sliding blocks (61, 62), with the slide (71) being adjustable in the grooves (72, 73) worked into the plates (12, 13) of the housing (11) of the fixture (1) by means of a tension element which, in a preferred embodiment, is configured as a rotating spindle (74).

9. The fixture in accordance with one or more of Claims 1 to 8,
**characterized in that**,
the threaded spindle (31) is located approximately in the center between the bearing pins (18, 19) of the support elements (14, 15) and the contact rollers (22, 23) for the workpiece (3) provided on the support elements (14, 15).

10. The fixture in accordance with one or more of Claims 1 to 9,
**characterized in that**,
the housing (11) comprises two plates (12, 13) kept at a distance from one another, between which the support elements (14, 15) and their bearing pins (18, 19) are arranged.

11. The fixture in accordance with one or more of Claims 1 to 10;
**characterized in that**,
a space (39, 40 or 41, 42) is provided in the support elements (14, 15) on both sides of the sliding blocks (37, 38) for accommodating the threaded spindle (31).

12. The fixture in accordance with one or more of Claims 1 to 11,
**characterized in that**,
the fixture (1) is provided with a support lever (24) in a pivoting bearing in the housing (11) and preferably actuated using a servo device (26), with the support lever (24) acting on the side of the workpiece (3) facing away from the support elements (14, 15).

13. The fixture in accordance with one or more of Claims 1 to 12,
**characterized in that**,
the support elements (14, 15) are provided with exchangeable adapters (30) mounted on them.

## Revendications

1. Lunette (1) pour l'appui d'une pièce à usiner (3) dans une machine-outil (2), notamment un vilebrequin dans un tour de fraisage et de tournage à banc incliné, moyennant deux éléments d'appui (14, 15) retenus dans un boîtier (11) et portant la pièce à usiner (3), disposés à une certaine distance l'un par rapport à l'autre et radialement réglable par rapport à la pièce à usiner (3), les éléments d'appui (14, 15) étant conçus en tant que leviers (16, 17) disposés sur l'extrémité éloignée de la pièce à usiner (3) et logés pivotants dans le boîtier (11), qui sont liés par l'intermédiaire d'une broche filetée (31), cette broche filetée (31) comportant des sections de filets opposées (32, 33) au niveau des endroits assignés aux deux éléments d'appui (14, 15), les sections opposées du filet (32, 33) s'engrènant respectivement dans un coulisseau (37 ou 38) logé pivotant dans des alésages cylindriques (35, 36) pratiqués dans les éléments d'appui (14, 15) perpendiculairement à l'axe de la broche filetée (31),
**caractérisée en ce que**
la broche filetée (31) est équipée d'un dispositif (51) permettant son arrêt dans une position de service quelconque.

2. Lunette d'après la revendication 1,
**caractérisée en ce que**
le dispositif d'arrêt (51) de la broche filetée (31) est constitué d'un actuateur (52) lié au boîtier (11) de la lunette (1), à travers lequel passe la broche filetée (31), et d'un ou de deux coins de serrage (57, 58) collaborant avec la broche filetée (31) et l'actuateur (52).

3. Lunette d'après la revendication 1 ou 2,
**caractérisée en ce que**,
à l'intérieur de l'actuateur (52), il est prévu sur la broche filetée (31) une butée (54), p. ex. sous la forme d'un anneau, et qu'entre celui-ci et l'actuateur (52), les coins de serrage (57, 58) se laissent serrer de préférence au moyen d'équipements servo (59, 60).

4. Lunette d'après une des revendications 1 à 3,
**caractérisée en ce que**
pour la compensation automatique d'un déport, l'actuateur (52) du dispositif d'arrêt (51) est disposé dans le boîtier (11) de la lunette (1) de manière pivotante et réglable en hauteur relativement à la broche filetée (31).

5. Lunette d'après la revendication 4,
**caractérisée en ce que**
pour le logement pivotant de l'actuateur (52), il est formé respectivement un téton (63, 64) directement sur le boîtier (11) ou sur des coulisseaux (61, 62) insérés dans celui-ci, qui s'engrènent dans des alésages (65, 66) pratiqués dans l'actuateur (52).

6. Lunette d'après la revendication 4 ou 5,
**caractérisée en ce que**
pour le réglage en hauteur de l'actuateur (52), il est inséré dans des gorges (43, 44) pratiquées dans le boîtier (11) respectivement un coulisseau (61, 62) lié à l'actuateur (52).

7. Lunette d'après une des revendications 1 à 6,
**caractérisée en ce que**
pour l'ajustement du centre de la pièce à usiner (3) lorsque le dispositif d'arrêt (51) est bloqué, celui-ci est retenu de manière réglable en direction de l'axe de la broche filetée (31).

8. Lunette d'après la revendication 7,
**caractérisée en ce que**
moyennant les coulisseaux (61, 62), le dispositif d'arrêt (51) est suspendu par joint à Cardan dans un tiroir (71) guidé, de préférence au moyen d'un élément de traction conçu sous la forme d'une broche de tournage (74), de manière réglable dans des gorges (72, 73) pratiquées dans les plaques (12, 13) du boîtier (11) de la lunette (1).

9. Lunette d'après une des revendications 1 à 8,
**caractérisée en ce que**
la broche filetée (31) est disposée à peu près au centre entre des boulons-paliers (18, 19) des éléments d'appui (14, 15) formant des articulations, et des galets d'appui (22, 23) de la pièce à usiner (3).

10. Lunette d'après une des revendications 1 à 9,
**caractérisée en ce que**
le boîtier (11) est formé par deux plaques (12, 13) disposées à une certaine distance l'une par rapport à l'autre, entre lesquelles sont arrangés les éléments d'appui (14, 15) et leurs boulons-paliers (18, 19).

11. Lunette d'après une des revendications 1 à 10,
**caractérisée en ce que**
dans les éléments d'appui (14, 15), il est prévu de part et d'autre des coulisseaux (37, 38) respectivement un espace libre (39, 40 ou 41, 42) pour le logement de la broche filetée (31).

12. Lunette d'après une des revendications 1 à 11,
**caractérisée en ce que**
la lunette (1) est équipée d'un levier d'appui (24) logé de manière pivotante dans le boîtier (11) et actionné de préférence au moyen d'un équipement servo (26), qui, sur la face opposée aux éléments d'appui (14, 15), agit sur la pièce à usiner (3).

13. Lunette d'après une des revendications 1 à 12,
**caractérisée en ce que**
les éléments d'appui (14, 15) sont équipés d'adaptateurs échangeables (30).
